(19) Europäisches Patentamt / European Patent Office / Office européen des brevets

(11) **EP 2 438 606 B1**

(12) **EUROPEAN PATENT SPECIFICATION**

(45) Date of publication and mention
of the grant of the patent:
**22.04.2015 Bulletin 2015/17**

(51) Int Cl.:
***H01J 65/04*** *(2006.01)*

(21) Application number: **10725234.8**

(86) International application number:
**PCT/GB2010/000900**

(22) Date of filing: **07.05.2010**

(87) International publication number:
**WO 2010/133822 (25.11.2010 Gazette 2010/47)**

(54) **LUCENT PLASMA CRUCIBLE IN COMBINATION WITH A FARADAY CAGE**

TIEGEL FÜR LICHTEMITTIERENDES PLASMA IN KOMBINATION MIT EINEM FARADAY-KÄFIG

CREUSET DE PLASMA RADIOTRANSPARENT COMBINÉ AVEC UNE CAGE DE FARADAY

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **20.05.2009 GB 0908727
10.09.2009 US 241305 P**

(43) Date of publication of application:
**11.04.2012 Bulletin 2012/15**

(73) Proprietor: **Ceravision Limited
Bletchley, Milton Keynes MK3 6EB (GB)**

(72) Inventors:
• **NEATE, Andrew Simon
Buckinghamshire HP19 7FN (GB)**
• **PRESTON, Barry
Leicestershire LE24 2TE (GB)**

(74) Representative: **Brooks, Nigel Samuel
Hill Hampton
East Meon
Petersfield, Hampshire GU32 1QN (GB)**

(56) References cited:
**US-A- 5 227 698       US-A- 5 834 895
US-A1- 2002 011 802    US-A1- 2007 171 006**

## Description

The present invention relates to a lucent plasma crucible in combination with a Faraday cage.

In our International Patent Application No. PCT/GB2008/003829, published as WO 2009/063205 A2, we describe and claim:

1. *A light source to be powered by microwave energy, the source having:*

- *a solid plasma crucible of material which is lucent for exit of light therefrom, the plasma crucible having a sealed void in the plasma crucible,*
- *a Faraday cage surrounding the plasma crucible, the cage being at least partially light transmitting for light exit from the plasma crucible, whilst being microwave enclosing,*
- *a fill in the void of material excitable by microwave energy to form a light emitting plasma therein, and*
- *an antenna arranged within the plasma crucible for transmitting plasma-inducing microwave energy to the fill, the antenna having:*

  - *a connection extending outside the plasma crucible for coupling to a source of microwave energy;*

  *the arrangement being such that light from a plasma in the void can pass through the plasma crucible and radiate from it via the cage.*

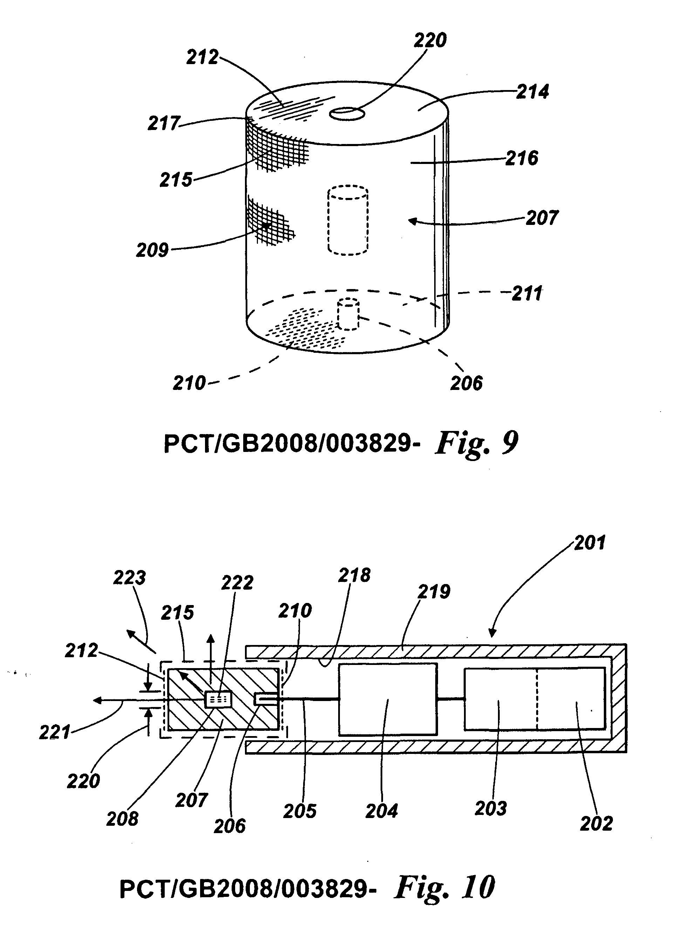

In connection with Figures 9 and 10 of that application, which are reproduced herewith and are a perspective view of a lucent crucible and a diagrammatic view of a microwave powered lamp including the lucent crucible, there is described:

*a lamp 201 comprises an oscillator 202 and amplifier 203 together forming a source of microwave energy, typically operating at 2.45 or 5.8 GHz or other frequencies within an ISM band. The source passes the microwaves via a matching circuit 204 to an antenna 205 extending into a re-entrant 206 in a lucent, plasma crucible 207. This is of quartz and has a central void 208 containing a fill of noble gas and a microwave excitable material, which radiates light when excited by microwaves. The quartz being transparent, light can leave it in any direction, subject to the constraints provided by the Faraday cage described below.*

*The crucible is a right circular cylinder, 63mm long and 43mm in diameter. Centrally in the crucible, the void is 10mm long and 3mm in diameter. The re-entrant is co-axial with the void, being 2 mm in diameter and 10mm long.*

*A Faraday cage 209 surrounds the crucible and comprises:*

- *a light reflective coating 210, typically of silver with silicon monoxide, across the end surface 211 having the antenna re-entrant,*
- *an indium tin oxide (ITO) deposit 212 on the end surface 214 and*
- *a conductive, chemical-vapour-deposited mesh 215 on the cylindrical surface 216, the mesh having fingers 217 which extend onto the ends, for electrical interconnection of the elements 210, 212 & 215. The lines of the mesh are 0.5mm wide and set at a pitch of 6.0mm.*

*The Faraday cage is earthed by being received in a recess 218 in a housing 219.*

*The ITO deposit has an un-plated 12mm aperture 220 centrally placed in the end face 214, whereby light 221 from the end of the plasma discharge 222 in the void can pass directly out of the lucent plasma crucible, without attenuation in by the Faraday cage. Much light also passes out via the Faraday cage, although attenuated to an extent.*

*It should be noted that the Faraday cage can be formed entirely of wire mesh formed around the crucible, with an aperture in line with the void.*

For understanding of this light source, we use the following definitions: "lucent" means that the material, of which the item described as lucent, is transparent or translucent;

"plasma crucible" means a closed body for enclosing a plasma, the latter being in a void when a fill in the void is excited by microwave energy from the antenna.

In the further development of our light source, we have investigated alternatively shaped lucent plasma crucibles, able to maintain microwave resonance within their Faraday cages.

US 5834895, in the name of Fusion Lights Inc, teaches a high intensity discharge lamp. A bulb is provided within an airwave guide defined by a Faraday cage, the fill of which is excited by microwave energy, while the bulb is rotated at high speed. The lamp may be operated in a couple of transverse electric modes, depending in part on the number of magnetrons and the rotation speed. In addition, US 5227698, in the name of Fusion Systems Corporation, teaches a microwave-powered lamp very similar to the one described above. This patent teaches that a rotating electric field of constant polarisation should be created to create uniformity. These devices suggest the establishment of two fields, adding a further layer of complexity to the devices. In addition an airwave guide has a low dielectric constant resulting in a large device, which is disadvantageous.

The object of the present invention is to provide an improved lucent plasma crucible in combination with a Faraday cage.

According to the invention, we provide a lucent plasma crucible in combination with a Faraday cage in accordance with claim 1.

Preferably the orders of the modes are 0,1 or 2.

Whilst we prefer to use circular cylindrical lucent crucibles, we expect rectangular crucibles to be suitable. Further, the crucibles can be of other regular shape, such as spherical, or indeed of irregular shape.

For circular cylindrical crucibles, we expect the diameter (d), length (1) and operating frequency (f) to fall within the following ranges - with (d) & (1) in cm and (f) in MHz:

- the square of the diameter divided by the length - (d / 1)$^2$ - to be between 0 and 100 and
- the square of the diameter times frequency to be - (d x f)$^2$ - to be between 0 and 2x10$^9$.
- We prefer;0 < (d / 1)$^2$ < 20 and
- 0 < (dxf)$^2$ < 1.5x10$^9$.

To help understanding of the invention, a specific embodiment thereof will now be described by way of example and with reference to the accompanying drawings, in which:

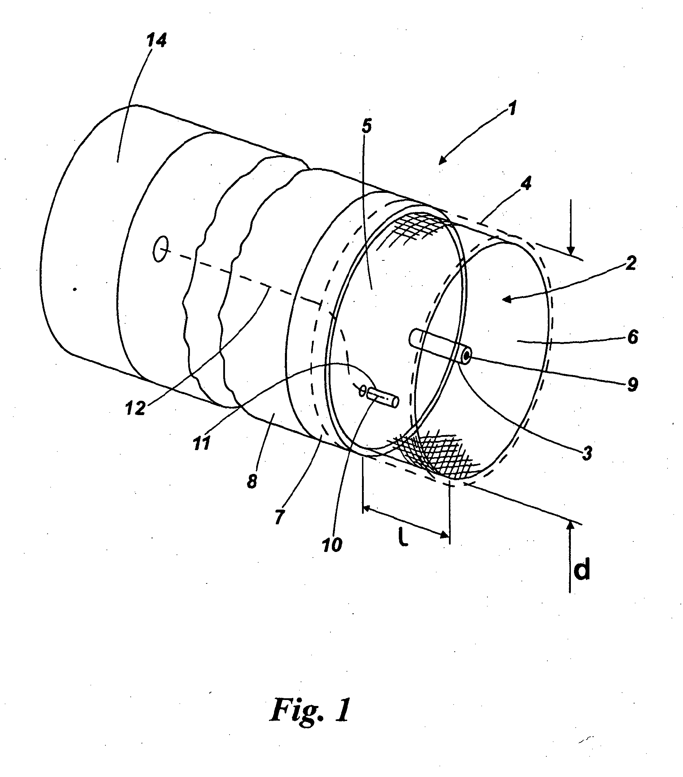

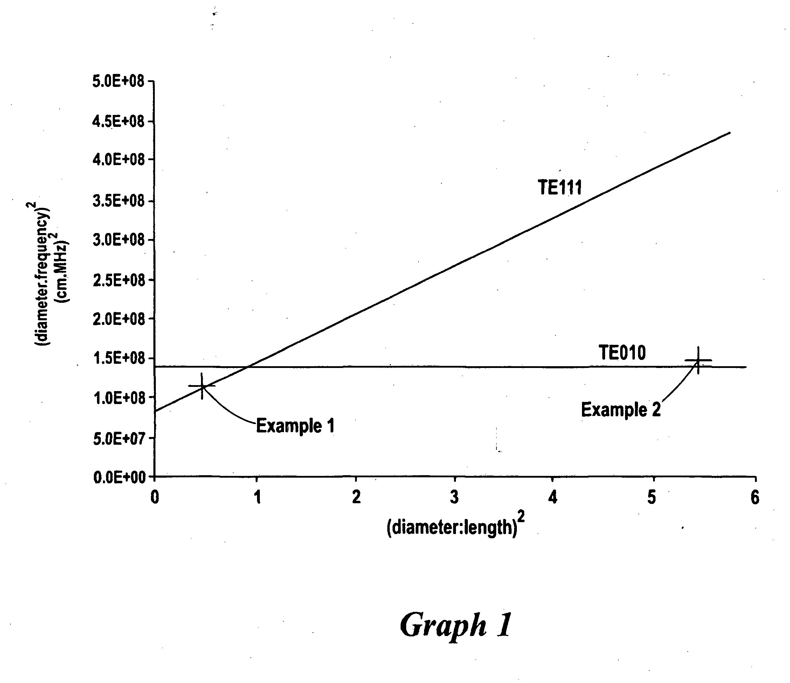

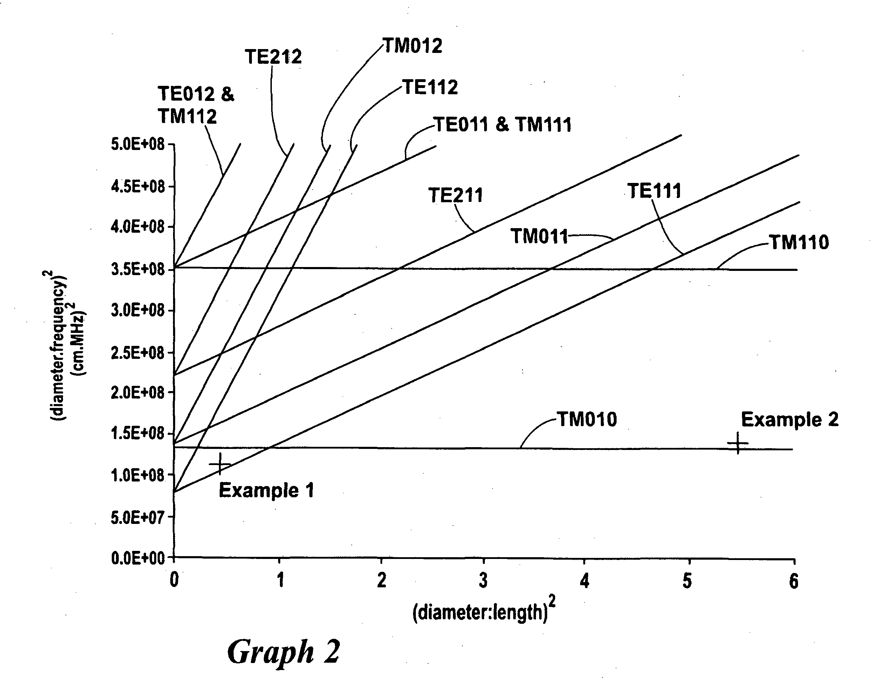

Figure 1 is a perspective view of a lucent plasma crucible in accordance with the invention.

Referring to Figure 1, a light source 1 to be powered by microwave energy is shown. The source has a circularly cylindrical piece 2 of quartz, forming a solid plasma crucible. Quartz is transparent to visible light and the outer surfaces of the quartz are polished. The crucible has a length *l* and a diameter *d.* Aligned centrally is a void 3. It is short and of small diameter with respect to the dimensions of the crucible itself. The void is sealed by working of the material of the crucible or an additional piece of quartz. Methods of sealing are described in International application No PCT/GB 2010/000313 published as WO 2010/094938 A1.

A Faraday cage 4 surrounds the curved side surface 5 and one end surface 6 of the crucible. It is of metallic mesh or reticular metallic sheet, such that the majority of light passing out of the crucible at these surfaces passes through the cage, whilst microwaves cannot. A band 7 of the cage extends around an end of a carrier 8 to which the cage is fastened, thereby carrying the crucible.

A fill of microwave excitable material 9, typically a metal halide in a noble gas is contained to form a light emitting plasma therein An antenna 10 is arranged in a bore 11 extending within the plasma crucible for transmitting plasma-inducing microwave energy to the fill. The antenna has a connection 12 extending outside the plasma crucible for coupling to a source of microwave energy 14 - the source being shown diagrammatically. Details of such a source and means for feeding microwave energy into the connection are described in our co-pending International patent application, filed under Nigel Brooks' reference 2953/PCT and claiming priority from our British patent application No 0907947.6, dated 8th May 2009, published as WO 2010/128301 A2.

In the following examples of lucent crucibles in which we have lit plasmas, we use quartz, which has a dielectric constant of 3.78, as the material of the lucent crucible and we operate at a frequency of 2,450 MHz.

<u>TE 111 Mode Example</u>

In this example, the plasma crucible is 4.38cm in diameter and 6.43cm in length. The sealed plasma void is placed centrally on the central axis, with the antenna re-entrant being on the central axis at one end.

For operation in this mode, the length (1) and the diameter (d) can be varied, provided that they satisfy the equation:

$$(d \times f)^2 = A + B (d / l)^2$$

where (f) is the frequency and A & B are constants. Their value is

$$A = 8.0x10^7$$

$$B = 6.0x10^7$$

Accompanying Graph 1 shows a plot of this equation, marked TE111, as a constant gradient line.

In this example,

$$(d / l)^2 = 0.46$$

and

$$(d \times f)^2 = 1.15x10^8.$$

This is marked on Graph 1 at Example 1.

<u>TM010 Mode Example</u>

In this example the plasma crucible is 4.9cm in diameter and 2.1cm in length. Again, the sealed plasma void is placed centrally on the central axis, with the antenna re-entrant being at one end, but offset from the central axis and close to the central void.

For operation in this mode, the length can vary independently of diameter, which remains constant.

The equivalent plot marked TM010 is shown on Graph 1, with

$$A = 1.4 \times 10^8$$

$$B = 0$$

The plot is a horizontal line.
In this example,

$$(d / l)^2 = 5.44$$

and

$$(d \times f)^2 = 1.44 \times 10^8.$$

This is marked on Graph 1 at Example 2.
It should also be noted that the positions of the examples with respect to the plots, which are in accordance with resonant cavity theory, are slightly high. These examples have been tried and found to work. If the filled void occupies a significant proportion of the volume of the crucible, an adjusted value of the dielectric constant should be used, the adjusted value being the average value for the volume, that is 1.00 for the void and 3.78 for the quartz. The adjustment is in inverse proportion to the square root of the dielectric constant resulting in a small increase in both d & 1. However for practical purposes, where the void remains a small proportion of the crucible volume, the adjustment can be ignored.
Also it should be noted that the TE111 mode is a higher Q mode, resulting in a higher electric field strength in the crucible for starting of the plasma.
The dimensions of the TE111 mode given in the example above are close to those given in connection with Figures 9 and 10 of our International Patent Application No. PCT/GB2008/003829. Insofar as these precise dimensions may be deemed to be known despite not being published at the priority date of the present patent application, they are disclaimed. Other (not disclaimed) dimensions are possible for operation in the TE111 mode. For instance, both d & 1 can be equal at 4.85cm as set out in Table 1 below. The diameter can be less than this, but greater than that of our earlier application at 4.47cm for instance, with the length being 5,58cm. Again the diameter can be smaller at 3,74cm with the length being greater at 18.71cm. Alternatively the diameter can be larger at 7.29cm with the length being half the diameter at 3.65cm.
The invention is not intended to be restricted to the details of the above two modes.
The skilled reader will recognise Graph 1 as a known mode plot, albeit adapted to the frequency and dielectric material in question. Graph 2 shows certain additional modes. Table 1 below shows typical dimensions of quartz plasma crucibles for additional modes having a d/l ratio of 1.00, that is with their diameter and length equal.

TABLE 1

| Mode | Length - 1 - cm | Diameter - d - cm |
|---|---|---|
| TE111 | 4.85 | 4.85 |
| TE211 | 6.88 | 6.88 |
| TE112 | 7.29 | 7.29 |
| TE011 | 8.30 | 8.30 |
| TE212 | 8.78 | 8.78 |
| TE012 | 9.93 | 9.93 |
| TM010 | 4.82 | 4.82 |
| TM110 | 7.68 | 7.68 |
| TM011 | 5.75 | 5.75 |
| TM111 | 8.30 | 8.30 |
| TM012 | 7.93 | 7.93 |
| TM112 | 9.93 | 9.93 |

Graph 2 shows these additional modes. From their position on the graph, it will be appreciated that certain of them require larger dimensions of quartz crucibles. Whilst all of the above dimensions fall within a nominal practical limit on size of 10cm, the modes can be classified as follows:

Modes for which a wide range of the d/l ratio is available:

TE111
TM010.

Modes for which a considerable range of the d/l ratio is available, although one dimension can get excessive:

TE211
TE112
TM110
TM011
TM012.

Modes for which a restricted range of the d/l ratio is available, with either or both dimensions are liable to be excessive:

TE011
TE212
TM 111.

Modes for which either or both dimensions are liable to be excessive regardless of the value of d/l:

TE012
TM112.

Certain of these modes have a higher Q than others.

The following Table 2 shows Q values:

TABLE 2

| Mode | Q Factor |
|-------|----------|
| TE111 | 0.27 |
| TE211 | 0.31 |
| TE112 | 0.45 |
| TE011 | 0.56 |
| TE212 | 0.43 |
| TE012 | 0.67 |
| TM010 | 0.13 |
| TM110 | 0.20 |
| TM011 | 0.16 |
| TM111 | 0.22 |
| TM012 | 0.18 |
| TM112 | 0.24 |

Taking account of both dimensional and Q considerations, we prefer to employ the following modes:

TE111
TE211
TE112
TE011
TE212.

**Claims**

1. A lucent plasma crucible (2) in combination with a Faraday cage (4),

   • the lucent plasma crucible including:
   • a sealed, central void (3) with

      • a fill (9) in the void of material excitable by microwave energy to form a light emitting plasma therein, **characterised in that**

   • the Faraday cage is of metallic mesh or reticular metallic sheet formed around the crucible, and **in that** the lucent plasma crucible is dimensioned to have low order transverse electric microwave mode properties or low order transverse magnetic microwave mode properties.

2. A lucent plasma crucible as claimed in claim 1, wherein the orders of the modes are 0, 1 or 2.

3. A lucent plasma crucible as claimed in claim 1 or claim 2, providing a rectangular crucible.

4. A lucent plasma crucible as claimed in claim 1 or claim 2, providing a circular cylindrical lucent crucible.

5. A lucent plasma crucible as claimed in claim 4, wherein the diameter (d), length (1) and operating frequency (f) fall within the following ranges - with (d) & (1) in cm and (f) in MHz:

   • the square of the diameter divided by the length - $(d / 1)^2$ - to be between 0 and 100 and
   • the square of the diameter times frequency to be - $(d \times f)^2$ - to be between 0 and $2 \times 10^9$.

6. A lucent plasma crucible as claimed in claim 5, wherein $(d / 1)^2$ is between 0 and 20.

7. A lucent plasma crucible as claimed in claim 5 or claim 6, wherein $(d \times f)^2$ is between 0 and $1.5 \times 10^9$.

8. A lucent plasma crucible as claimed in any one of claims 4 to 7, excluding a quartz crucible which is a right circular cylinder, 63mm long and 43mm in diameter.

9. A lucent plasma crucible as claimed in any one of claims 1 to 8, wherein the mode of the crucible is chosen from the following modes:

   • TE111
   • TE211
   • TE112
   • TE011
   • TE212.

10. A lucent plasma crucible as claimed in any preceding claim, wherein the crucible is of quartz.

**Patentansprüche**

1. Tiegel für lichtemittierendes Plasma (2) in Kombination mit einem Faraday-Käfig (4),

   • wobei der Tiegel für lichtemittierendes Plasma aufweist:
   • einem dicht schließenden, zentralen Hohlraum (3)
   • mit

• einer in dem Hohlraum vorgesehenen Füllung (9) in Form eines durch Mikrowellenenergie erregbaren Materials, um darin ein lichtemittierendes Plasma zu erzeugen, **dadurch gekennzeichnet, dass**

• der Faraday-Käfig von einem metallischen Gitter oder einem netzartigen metallischen Sheet gebildet ist, das um den Tiegel herum angeordnet ist, und dass der Tiegel für lichtemittierendes Plasma so dimensioniert ist, dass er wertniedrige transversale elektrische Mikrowellen-Modus Eigenschaften oder wertniedrige transversale magnetische Mikrowellen-Modus Eigenschaften hat.

2. Tiegel für lichtemittierendes Plasma nach Anspruch 1, **dadurch gekennzeichnet, dass** die Ordnungen der Modi 0, 1 oder 2 sind.

3. Tiegel für lichtemittierendes Plasma nach Anspruch 1 oder Anspruch 2, **dadurch gekennzeichnet, dass** er einen rechteckigen Tiegel bildet.

4. Tiegel für lichtemittierendes Plasma nach Anspruch 1 oder Anspruch 2, **dadurch gekennzeichnet, dass** er einen kreisförmigen, zylindrischen lichtemittierenden Tiegel bildet.

5. Tiegel für lichtemittierendes Plasma nach Anspruch 4, **dadurch gekennzeichnet, dass** der Durchmesser (d), die Länge (I) und die Betriebsfrequenz (f) in folgende Bereiche fallen - mit (d) & (I) in cm und (f) in Mhz:

   • das Quadrat des Durchmessers geteilt durch die Länge - $(d/I)^2$ - beträgt zwischen 0 und 100, und
   • das Quadrat des Durchmessers multipliziert mit der Frequenz - $(d \times f)^2$ - beträgt zwischen 0 und $2 \times 10^9$

6. Tiegel für lichtemittierendes Plasma nach Anspruch 5, **dadurch gekennzeichnet, dass** $(d/I)^2$ zwischen 0 und 20 ist.

7. Tiegel für lichtemittierendes Plasma nach Anspruch 5 oder Anspruch 6, **dadurch gekennzeichnet, dass** $(d \times f)^2$ zwischen 0 und $1,5 \times 10^9$ ist.

8. Tiegel für lichtemittierendes Plasma nach einem der Ansprüche 4 bis 7, unter Ausschluss eines Quarztiegels, der ein gerader Kreiszylinder mit einer Länge von 63mm und einem Durchmesser von 43mm ist.

9. Tiegel für lichtemittierendes Plasma nach einem der Ansprüche 1 bis 8, **dadurch gekennzeichnet, dass** der Modus des Tiegels aus den folgenden Modi ausgewählt ist:

   • TE111
   • TE211
   • TE112
   • TE011
   • TE212

10. Tiegel für lichtemittierendes Plasma nach einem der vorstehenden Ansprüche, **dadurch gekennzeichnet, dass** der Tiegel aus Quarz ist.

**Revendications**

1. Un creuset pour plasma luminescent (2) en combinaison avec une cage de Faraday (4),

   · le creuset pour plasma luminescent comprenant :
   · un vide central étanche (3) avec

      · un remplissage (9) dans le vide de matériau excitable par une énergie hyperfréquence pour y former un plasma émetteur de lumière, **caractérisé en ce que**
      · la cage de Faraday est en grillage métallique ou en feuille métallique réticulaire formés autour du creuset et **en ce que** le creuset pour plasma luminescent est dimensionné pour présenter des propriétés de mode hyperfréquence électrique transverse d'ordre inférieur ou des propriétés de mode hyperfréquence magnétique transverse d'ordre inférieur.

2. Un creuset pour plasma luminescent tel que revendiqué dans la revendication 1, dans lequel les ordres des modes sont 0, 1 ou 2.

3. Un creuset pour plasma luminescent tel que revendiqué dans la revendication 1 ou la revendication 2, formant un creuset rectangulaire.

4. Un creuset pour plasma luminescent tel que revendiqué dans la revendication 1 ou la revendication 2, formant un creuset luminescent cylindrique circulaire.

5. Un creuset pour plasma luminescent tel que revendiqué dans la revendication 4, dans lequel le diamètre (d), la longueur (1) et la fréquence de travail (f) tombent dans les plages suivantes - avec (d)&(l) en cm et (f) en MHz :

   · le carré du diamètre divisé par la longueur - $(d/l)^2$ -se situe entre 0 et 100 et
   · le carré du diamètre multiplié par la fréquence

-(dxf)$^2$- se situe entre 0 et 2x10$^9$.

6.   Un creuset pour plasma luminescent tel que revendiqué dans la revendication 5, dans lequel (d/l)$^2$ se situe entre 0 et 20.

7.   Un creuset pour plasma luminescent tel que revendiqué dans la revendication 5 ou la revendication 6, dans lequel (dxf)$^2$ se situe entre 0 et 1,5x10$^9$.

8.   Un creuset pour plasma luminescent tel que revendiqué dans l'une quelconque des revendications 4 à 7, à l'exclusion d'un creuset en quartz qui est un cylindre droit circulaire, de 63 mm de long et de 43 mm de diamètre.

9.   Un creuset pour plasma luminescent tel que revendiqué dans l'une quelconque des revendications 1 à 8, dans lequel le mode du creuset est choisi parmi les modes suivants :

      · TE111
      · TE211
      · TE112
      · TE011
      · TE212.

10.  Un creuset pour plasma luminescent tel que revendiqué dans l'une quelconque des revendications précédentes, où le creuset est en quartz.

PCT/GB2008/003829- *Fig. 9*

PCT/GB2008/003829- *Fig. 10*

**Fig. 1**

*Graph 1*

*Graph 2*

EP 2 438 606 B1

**EP 2 438 606 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2008003829 W
- WO 2009063205 A2
- US 5834895 A
- US 5227698 A
- GB 2010000313 W
- WO 2010094938 A1
- GB 0907947 A
- WO 2010128301 A2